# EUROPÄISCHE PATENTSCHRIFT

(11) **EP 0 787 384 B1**
(45) Veröffentlichungstag und Bekanntmachung des Hinweises auf die Patenterteilung: **09.12.1998**
(21) Anmeldenummer: 95931915.3
(22) Anmeldetag: 27.09.1995
(51) Int. Cl.: H03H 17/02, H03H 17/06

(54) **DE-/MULTIPLEXER VON FREQUENZBÄNDERN**
DE/MULTIPLEXER OF FREQUENCY BANDS
MULTIPLEXEUR-DEMULTIPLEXEUR DE BANDES DE FREQUENCES

(30) Priorität: 18.10.1994 DE 4437158
(43) Veröffentlichungstag der Anmeldung: 06.08.1997
(73) Patentinhaber: ROBERT BOSCH GMBH, 70442 Stuttgart (DE)
(72) Erfinder: BAYHA, Erwin, D-71409 Schwaikheim (DE); GOECKLER, Heinz, D-71522 Backnang (DE)
(86) Internationale Anmeldenummer: DE9501333
(87) Internationale Veröffentlichungsnummer: WO9612345

(56) Entgegenhaltungen:
- WO-A-92/11696
- DE-A- 4 116 495

## Beschreibung

Die Erfindung geht aus von einem De-/Multiplexer von Frequenzbändern gemäß Oberbegriff des Anspruches 1, 2 bzw. 7.

Solche De-/Multiplexer sind bekannt beispielsweise aus der deutschen Patentschrift DE 41 16 495 C1. Derartige Frequenz-De-/Multiplexer finden vielfältige Anwendung z.B. in der Satelliten-Kommunikationstechnik. Dort ist es insbesondere zwingend erforderlich, Volumen, Gewicht und Leistungsverbrauch niedrig zu halten.

Auch der vorliegenden Erfindung lag deshalb die Aufgabe zugrunde, einen Frequenz-De-/Multiplexer der eingangs genannten Art anzugeben, der mit möglichst wenig Aufwand, beispielsweise minimaler Chipfläche und/oder möglichst niedrigem Leistungsverbrauch auskommt bei voller Erfüllung der erforderlichen Betriebsfunktionen.

Diese Aufgabe wurde gelöst mit den Merkmalen des Anspruches 1, 2 bzw. 7. Vorteilhafte Ausgestaltungen ergeben sich durch die Unteransprüche.

Der erfindungsgemäße Frequenz-De-/Multiplexer weist die Vorteile auf, daß er mit minimalem Aufwand an Chipfläche und auch mit minimalem Leistungsverbrauch alle geforderten Betriebsfunktionen zu erfüllen imstande ist. Diese Vorteile fallen noch schwerer ins Gewicht, wenn es sich um eine De-Multiplexer in HMM-Struktur mit vielen gleichen HMM-Zellen handelt, wobei in jeder Zelle einige Multiplizierer oder Zustandsspeicher eingespart werden können und auch die Struktur der Zustandsspeicher derartig modifiziert ist, daß sie weniger Energie verbrauchen. Weitere Vorteile ergeben sich dadurch, daß einige gleiche Baugruppen mehrfach ausgenutzt werden im Zeitmultiplex. Außerdem wird durch eine Umstrukturierung von Addier- und Multiplikationsanordnungen in einfachere Multiplikations- und Addierbäume die Möglichkeit gegeben, daß die hinter Multiplikationsstufen übliche Wortbreitenverkürzung durch Quantisierung und der damit verbundene Quantisierungsfehler effizienter und mit weniger Aufwand kompensiert werden kann, was wiederum zu einer zusätzlichen Einsparung an Chipfläche und Chipleistung führt.

Es folgt nun die Beschreibung anhand der Figuren.

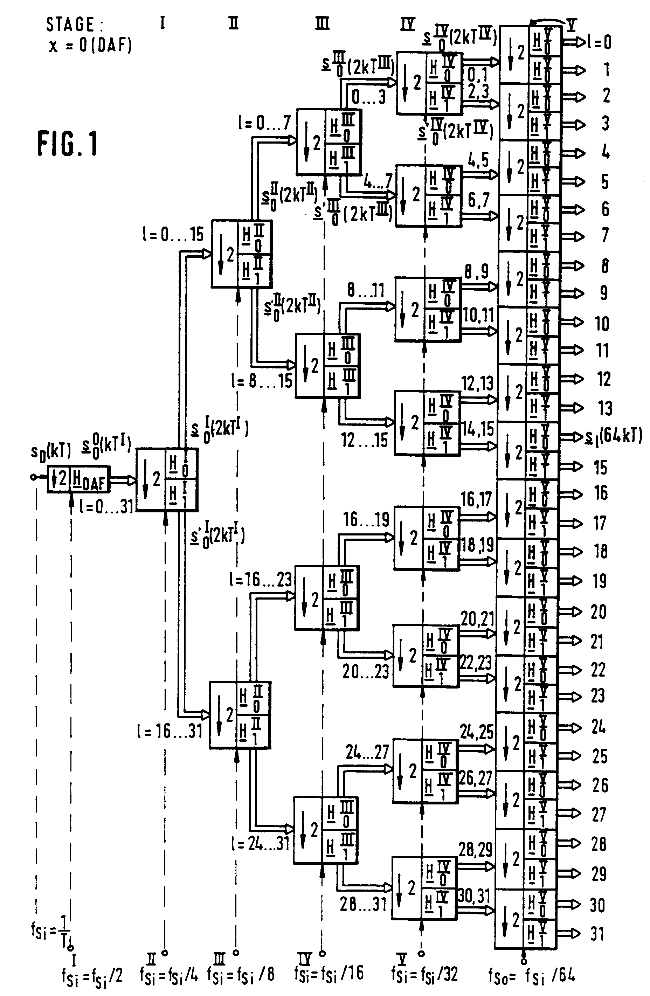

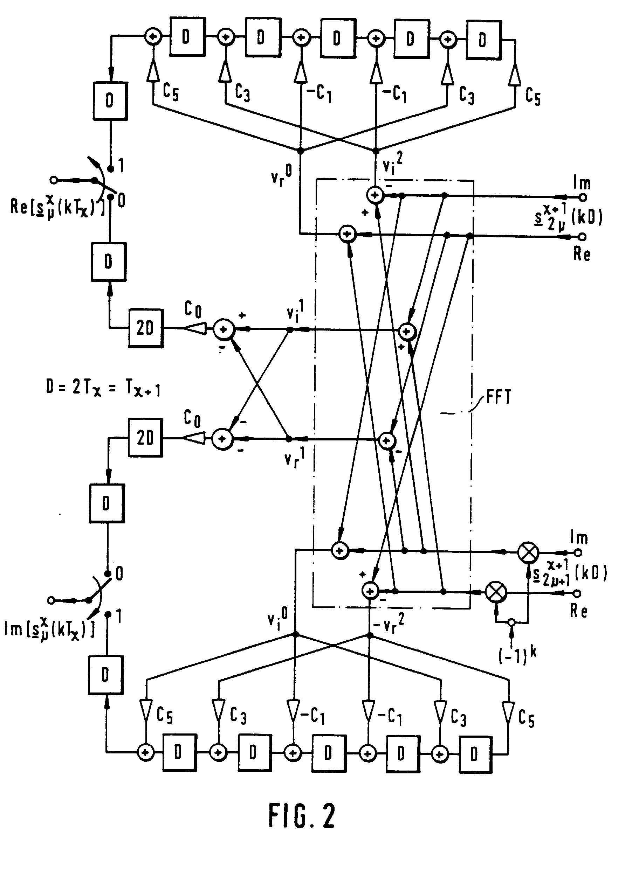

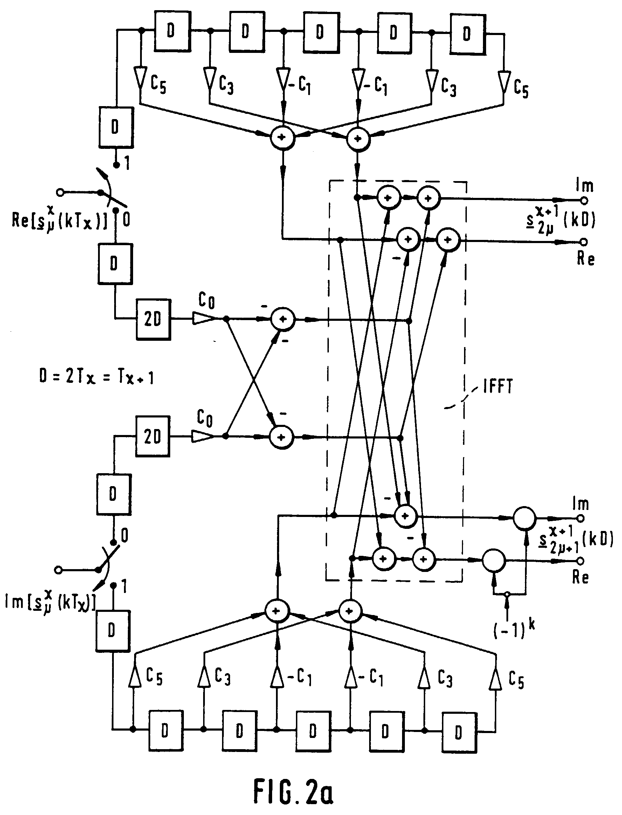

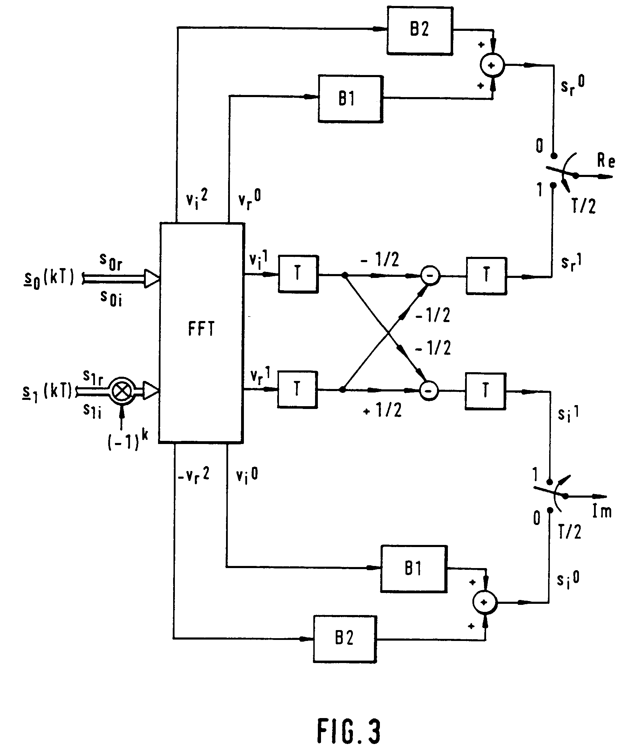

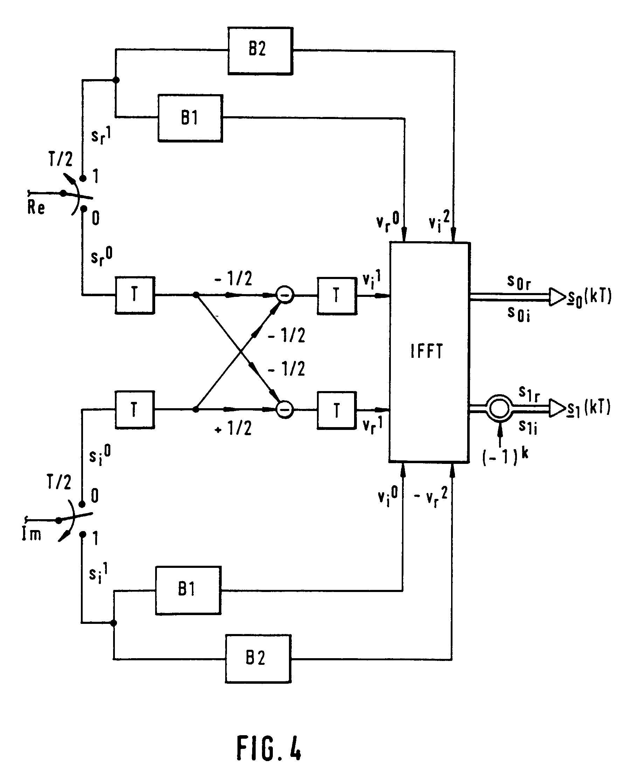

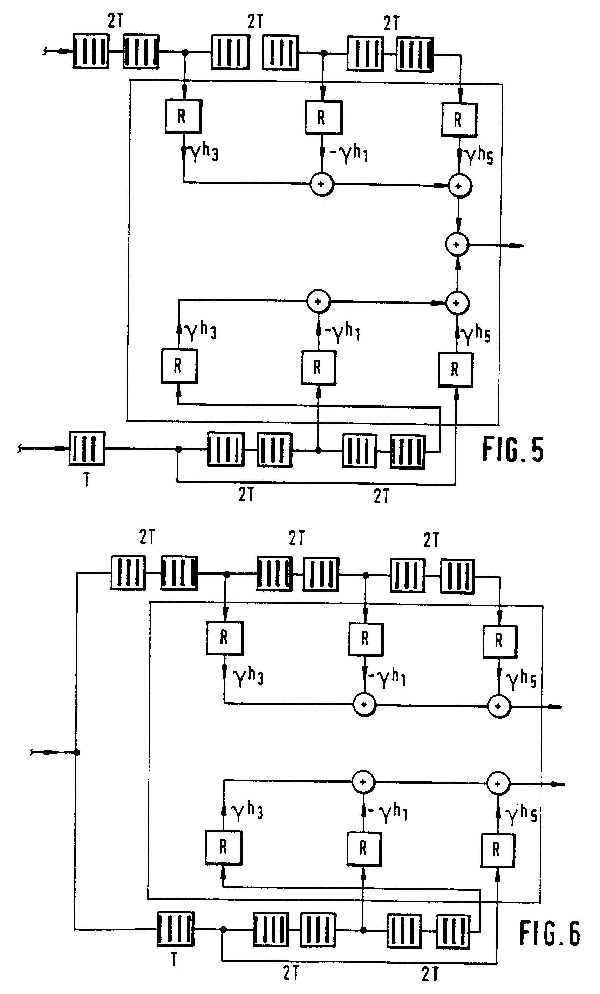

Die Figuren 1 bis 6 sind dem Stande der Technik entnommen, wobei in Figur 1 ein Vielkanal-HMM-Demultiplexer mit vielen HMM-Zellen etwa der Form gemäß Figur 2 abgebildet ist. Allerdings zeigt die Figur 2 einen HMM-Zellen-Multiplexer, welcher für den Einsatz in Figur 1 zu transponieren wäre. Das Ergebnis einer solchen Transposition liegt im Demultiplexer gemäß Fig. 2a vor. In Figur 3 ist ebenfalls ein Multiplexer mit etwas gröberer Gliederung und in Figur 4 in entsprechender Weise ein Demultiplexer gezeichnet. Die in Figur 4 und 3 erkennbaren Anordnungen der Baugruppen B1 und B2 sind in Figur 5 und 6 in detaillierterer Form wiedergegeben.

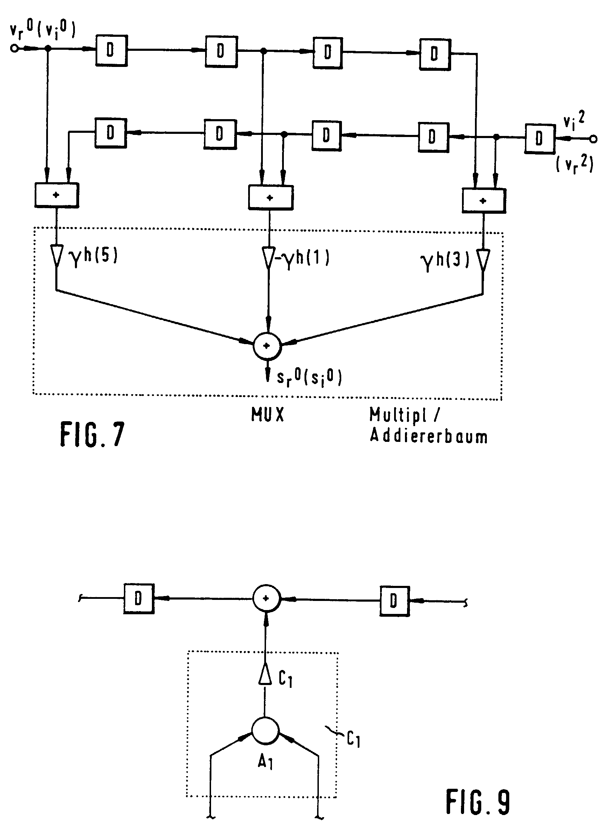

Für die Anordnung der Baugruppen B1 und B2 für die Frequenz-Multiplexeranwendung (Fig. 5) gibt es nun die erfindungsgemäßen Anordnungen gemäß Figur 7, 8 und 9, welche erheblich weniger Aufwand an Multiplizierern bzw. an Verzögerungsgliedern erfordern.

Die Baugruppen B1 und B2 nach Figur 3 bzw. 4 haben eine Struktur, die sich aus einer Kette von Addier- und Verzögerungsgliedern sowie einer Reihe von Koeffizienten-Multiplizierern besteht, siehe Figur 2 unten bzw. ganz oben oder Figur 5 bzw. 6. Anhand der Figur 7 erkennt man das erfindungsgemäße Vorgehen für die Anordnung der Blöcke Bl und B2 gemäß Fig. 5 (FMUX), nämlich eine Verkettung der beiden Baugruppen Bl und B2 nicht aber in der Form gemäß Figur 2 unten bzw. ganz oben, sondern in der Form, daß die beiden Eingangssignale vr⁰ und vi² bzw. vi⁰ und vr² zunächst in reine Verzögerungsketten eingeleitet werden, dann gemäß der Filtervorschrift mittels Summierglieder zusammengefaßt werden, um anschließend mittels dreier Koeffizientenmultiplizierer gewichtet zu werden. Die Ausgänge dieser drei Koeffizientenmultiplizierer werden dann mittels des letzten Summierers zum Teilausgangssignal sr⁰ bzw. si⁰ zusammengefaßt, um anschließend der Ausgangsmultiplexbildung zugeführt zu werden.

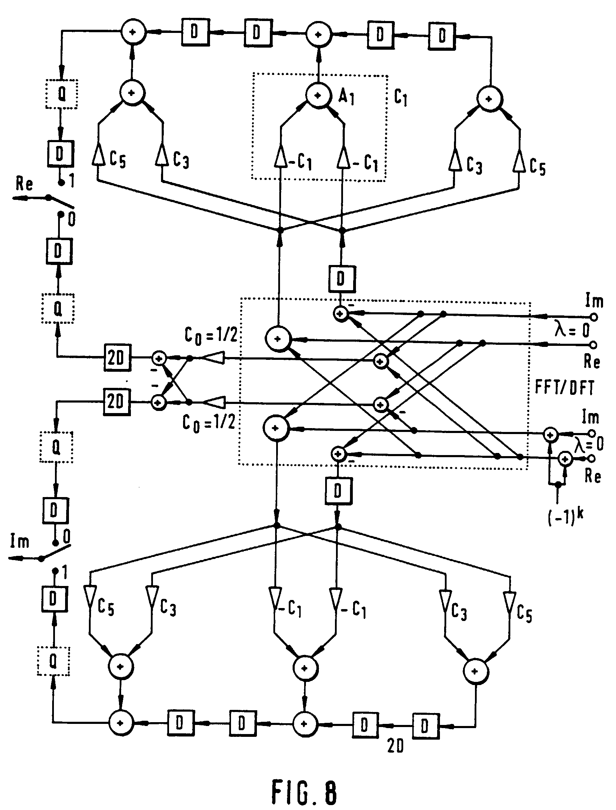

Die Einsparung beträgt 50 % der Multiplizierer pro B1/B2-Anordnung. Außerdem entsteht ein Multiplizierer/Addiererbaum, welcher eine einfache Quantisierungsfehlerkompensation ermöglicht. Näheres darüber siehe in Fig. 8. Ein weiterer Vorteil besteht darin, daß der Zustandsspeicher in größeren Einheiten konzentriert ist, so daß die Schieberegister, welche für jeden Schiebevorgang einen hohen Leistungsverbrauch haben, ersetzt werden können durch FIFO-Speicher oder RAM-Speicher, welche effizienter ansteuerbar sind zum Ein- bzw. Auslesen, beispielsweise Ansteuerung über Zeiger- oder Adreßrechnung, und welche leistungsärmer arbeiten. Noch ein Vorteil liegt darin, daß die erforderliche Wortbreite der Zustandsspeicher identisch ist und höchstens um ein Bit (wegen der vorgeschalteten FFT) größer ist als die Eingangssignalwortlänge der Frequenzmultiplexer-Filterzelle. Bei der Kette aus Summier- und Verzögerungsgliedern gemäß Figur 2 ist die Wortbreite der Verzögerungsglieder D dagegen ohne weitere Maßnahmen der Wortbreitenverkürzung gleich der Summe der Koeffizienten-C-Wortbreite und der Eingangssignalwortbreite, also in etwa die doppelte Eingangswortbreite, es sei denn, daß jeweils nach den Koeffizienten-Multiplikationen eine Quantisierung vorgenommen wird (Wortbreitenverminderung auf eine filterinterne Wortbreite, die aber stets größer ist als die Eingangssignalwortbreite), was dann allerdings immer noch einen gewissen Zusatzaufwand darstellt (vor allem dann, wenn Korrektursignale, beispielsweise zur Minimierung von Gleichanteilen, hinzuaddiert werden).

Die Multiplexer-Filterstruktur gemäß Figur 8 weist zwar die gleiche Anzahl an Multiplizierern auf wie diejenige gemäß Figur 2 oder 5, doch wurden hier kleine Multiplizierer-/ Addiererbäume geschaffen, welche aufwandsgünstigere Realisierungen erlauben, insbesondere wenn die Koeffizienten im CSD-Code realisiert sind (CSD-Code steht für Canonic Signed Digit Code). Die Zahl der Zustandsspeicher ist jedoch minimal, d.h. kanonisch, nämlich nur zwei Verzögerungsglieder mit der doppelten Taktverzögerungszeit 2D und ein Verzögerungsglied mit der einfachen Taktverzögerungszeit D am Ausgang des FFT/DFT-Blocks. Dies führt vor allem bei großen Frequenzmultiplexerbäumen zu entsprechenden Aufwandsvorteilen. Außerdem sind die Zustandsspeicher in größerer Einheit konzentriert, wodurch die weiter oben geschilderten Vorteile auch hier erzielt werden können. Dadurch, daß die sechs Multiplizierer sich auf drei Multiplizier-/Addierbäume verteilen, kann eine Quantisierung (ggf. incl. Hinzufügen von Korrekturgrößen) jeweils am Ausgang dieser Bäume mit weniger Aufwand als in Figur 2 erfolgen, was auch zur entsprechenden ggf. unterschiedlichen Verkürzung der Wortbreite in den Zustandsspeichern führt. Legt man aber keinen Wert auf die Wortbreite dieser Zustandsspeicher, so kann die Quantisierung erst im Ausgangszweig erfolgen, wodurch der Aufwand für die Quantisierung entsprechend vermindert wird. Es besteht schließlich die Möglichkeit, die Wortbreite in jedem Multiplizierer/Addiererbaum angemessen zu vermindern (z.B. durch die aufwandsminimale Abschneideoperation) und die Korrekturgröße(n) einmalig für alle M/A-Bäume am Ausgang der Kette zu addieren.

Ein weiterer Multiplizierer kann gemäß Figur 9 eingespart werden, wenn die Addition in den mittleren Zweigen der Figur 8 vor der Multiplikation mit -c1 erfolgt.

Eine doppelte Ausnutzung der Baugruppen B1 + B2 im Zeitmultiplex sowohl durch die komplexen Ausgangssignale vi⁰, vr² und vr⁰, vi² der schnellen Fouriertransformation FFT nur mit einem Satz B1, B2 läßt den Aufwand weiterhin reduzieren. Die Anwendung in einem vielkanaligen HMM-Frequenz-De-/Multiplexer vervielfacht auch hier den Einsparungsaufwand.

## Patentansprüche

1. Frequenz-Multiplexer zum frequenzmäßigen Zusammenführen von n mit der Abtastfrequenz fa/n abgetasteten Einzelsignalen der Bandbreite B, die einer Fouriertransformation FFT unterzogen werden, deren komplexe Ausgangssignale jeweils mit paarweise gleichen Koeffizienten gewichtet und in einer Kette von Verzögerungs- und SummierGliedern eingespeist werden, wobei die Ausgangssignale dieser Ketten mit der Abtastfrequenz fa zeitlich gemultiplext werden zum komplexen Frequenz-Multiplexausgangssignal, dadurch gekennzeichnet, daß Imaginärteil und Realteil der komplexen Ausgangssignale der Fouriertransformation FFT jeweils einer separaten Kette von Verzögerungsgliedern zugeführt werden,
daß jeweils die so unterschiedlich verzögerten Signalwerte der Kette des Imaginärteils bzw. des Realteils, welche die gleiche Gewichtung erfahren sollen, mittels Addierer zusammengefaßt und anschließend mittels eines einzigen Multiplizierers gewichtet werden und
daß jeweils die Ausgangssignale dieser Multiplizierer mittels weiterer Summierer zusammengefaßt und anschließend der Multiplexbildung zugeführt werden. (Fig. 7)

2. Frequenz-Multiplexer zum frequenzmäßigen Zusammenführen von n mit der Abtastfrequenz fa/n abgetasteten Einzelsignalen der Bandbreite B, die einer Fouriertransformation FFT unterzogen werden, deren komplexe Ausgangssignale jeweils mit paarweise gleichen Koeffizienten gewichtet und in einer Kette von Verzögerungs- und SummierGliedern eingespeist werden, wobei die Ausgangssignale dieser Ketten mit der Abtastfrequenz fa zeitlich gemultiplext werden zum komplexen Frequenz-Multiplexausgangssignal, dadurch gekennzeichnet, daß von den Ketten aus Verzögerungs- und Summiergliedern jeweils ein Verzögerungsglied herausgezogen ist,
daß mit diesem Verzögerungsglied jeweils der entsprechende Teil der komplexen Ausgangssignale der Fouriertransformation FFT verzögert wird,
daß anschließend jeweils der verzögerte und der nicht verzögerte Teil der komplexen Ausgangssignale der Fouriertransformation FFT mit den verschiedenen Koeffizienten gewichtet, paarweise entsprechend zusammengefaßt und jeweils in die restlichen Ketten von Verzögerungs- und Summiergliedern eingespeist werden. (Fig. 8)

3. Frequenz-Multiplexer nach Anspruch 2, dadurch gekennzeichnet, daß diejenigen zusammengehörigen verzögerten bzw. nicht verzögerten Teile der komplexen Ausgangssignale der Fouriertransformation FFT, welche Teile die gleiche Gewichtung erfahren sollen, mittels eines Addierers zusammengefaßt und anschließend mit einem einzigen Multiplizierer gewichtet werden.

4. Frequenz-Multiplexer nach einem der vorhergehenden Ansprüche, dadurch gekennzeichnet, daß in den einzelnen Zweigen vor der zeitlichen Multiplexbildung eine Quantisierung erfolgt,
daß zur Kompensation des durch diese Quantisierung entstehenden mittleren Quantisierungsfehlers in einem der Addierer zwischen einem der Multiplizierer und der Quantisierung ein Korrektursignal eingespeist wird.

5. Frequenz-Multiplexer nach einem der vorhergehenden Ansprüche, dadurch gekennzeichnet, daß jeweils an sich gleiche Baugruppen, in denen die verschiedenen komplexen Ausgangssignale der schnellen Fouriertransformation FFT der gleichen Verarbeitung unterzogen werden, ersetzt werden durch eine einzige dieser Baugruppen,
daß die komplexen Ausgangssignale der schnellen Fouriertransformation FFT abwechselnd im Zeitmultiplex in diese Baugruppe eingespeist werden,
daß die Anzahl der Verzögerungsglieder um die Anzahl der einzuspeisenden Signalpaare vervielfacht ist zur sequentiellen Aufnahme und Zwischenspeicherung der abwechselnd eingespeisten Signalwerte und
daß die komplexen Werte der einzelnen Signale abwechselnd ausgelesen werden.

6. Frequenz-Multiplexer nach einem der vorhergehenden Ansprüche, gekennzeichnet durch die Verwendung in einem mehrstufigen Filterbaum der hierarchischen Multistufenmethode.

7. Frequenz-Demultiplexer zum frequenzmäßigen Trennen eines mit der Abtastfrequenz fa abgetastetem aus n Einzelsignalen der Bandbreite B zusammengesetzten Frequenzmultiplexsignals, dadurch gekennzeichnet, daß ein Multiplexer nach einem der vorhergehenden Ansprüche verwendet wird, der einer Transposition unterzogen ist, d.h. daß alle Signalflußrichtungen umgekehrt sind, Ein- und Ausgänge vertauscht sind, Summierer durch Verzweigungspunkte und umgekehrt ersetzt sind, die diskrete oder schnelle Fouriertransformation ersetzt ist durch eine inverse diskrete oder schnelle Fouriertransformation, wobei die Erhöhung der Abtastfrequenz um den Faktor n durch die Erniedrigung der Abtastfrequenz um den Faktor n ersetzt ist und wobei alle Schalterfunktionen zum Multiplexen durch solche zum Demultiplexen ersetzt sind.

8. Frequenz-De-/Multiplexer nach einem der vorhergehenden Ansprüche, dadurch gekennzeichnet, daß die auf n vervielfachten Verzögerungsglieder bzw. die Ketten von Verzögerungsgliedern, welche nicht durch Addierglieder bzw. Zwischenausgänge unterbrochen sind, durch eine FIFO-Speicherstruktur oder durch eine RAM-Struktur implementiert sind.

## Claims

1. Frequency-division multiplexer for combining the frequencies of n individual signals of bandwidth B which are sampled at the sampling rate fa/n and are subjected to Fourier transformation FFT, the complex output signals of which are respectively weighted with coefficients, which are equal in pairs, and fed into a chain of delay elements and summing elements, the output signals of these chains being time-division multiplexed at the sampling frequency fa to form the complex frequency-division multiplex output signal, characterized in that the imaginary part and real part of the complex output signals of the Fourier transform FFT are fed in each case to a separate chain of delay elements, in that in each case the signal values thus differently delayed of the chain of the imaginary part or the real part, which are intended to undergo the same weighting, are combined by means of adders and subsequently weighted by means of a single multiplier, and in that in each case the output signals of these multipliers are combined by means of further summers and subsequently fed to the multiplexing operation. (Figure 7)

2. Frequency-division multiplexer for combining the frequencies of n individual signals of bandwidth B which are sampled at the sampling rate fa/n and are subjected to Fourier transformation FFT, the complex output signals of which are respectively weighted with coefficients, which are equal in pairs, and fed into a chain of delay elements and summing elements, the output signals of these chains being time-division multiplexed at the sampling frequency fa to form the complex frequency-division multiplex output signal, characterized in that in each case one delay element is extracted from the chains of delay elements and summing elements, in that this delay element is used respectively to delay the corresponding part of the complex output signals of the Fourier transform FFT, and in that subsequently the delayed part and the non-delayed part of the complex output signals of the Fourier transform FFT are respectively weighted with the various coefficients, correspondingly combined in pairs and fed in each case into the remaining chains of delay elements and summing elements. (Figure 8)

3. Frequency-division multiplexer according to Claim 2, characterized in that those associated delayed or non-delayed parts of the complex output signals of the Fourier transform FFT, which parts are intended to undergo the same weighting, are combined by means of an adder and subsequently weighted by a single multiplier.

4. Frequency-division multiplexer according to one of the preceding claims, characterized in that quantization is performed in the individual branches upstream of the time-division multiplexing, and in that a correction signal is fed into one of the adders between one of the multipliers and the quantization in order to compensate for the mean quantization error produced by this quantization.

5. Frequency-division multiplexer according to one of the preceding claims, characterized in that modules respectively identical per se and in which the various complex output signals of the fast Fourier transform FFT are subject to identical processing are replaced by a single one of these modules, in that the complex output signals of the fast Fourier transform FFT are fed alternately by time-division multiplexing into these modules, in that the number of delay elements is multiplied by the number of signal pairs to be fed in for the purpose of sequential pickup and buffering of the signal values alternately fed in, and in that the complex values of the individual signals are alternately read out.

6. Frequency-division multiplexer according to one of the preceding claims, characterized by use of the hierarchic multistage method in a multistage filter tree.

7. Frequency-division demultiplexer for splitting the frequencies of a frequency-division multiplex signal which is sampled at the sampling rate fa and is composed of n individual signals of bandwidth B, characterized in that use is made of a multiplexer according to one of the preceding claims, which is subjected to transposition, that is to say all signal flow directions are reversed, inputs and outputs are interchanged, summers are replaced by branch points and vice versa, and the discrete or fast Fourier transform is replaced by an inverse discrete or fast Fourier transform, the increasing of the sampling rate by the factor n being replaced by the lowering of the sampling rate by the factor n, and all switch functions for multiplexing are replaced by ones for demultiplexing.

8. Frequency demultiplexer/multiplexer according to one of the preceding claims, characterized in that the delay elements multiplied to n or the chains of delay elements which are not interrupted by summing elements or intermediate outputs are implemented by a FIFO memory structure or by a RAM structure.

## Revendications

1. Multiplexeur de fréquences pour la réunion en fréquence de (n) signaux séparés détectés avec une fréquence d'échantillonnage fa/n correspondant à la largeur de bande B, ces signaux étant soumis à une transformation de Fourier rapide FFT, et les signaux de sortie complexes étant chaque fois pondérés par paires avec les mêmes coefficients et injectés dans une chaîne d'éléments de temporisation et d'addition,
les signaux de sortie de cette chaîne étant multiplexés dans le temps avec la fréquence de détection fa pour donner un signal de sortie multiplexé en fréquence, complexe,
caractérisé en ce que
- la partie imaginaire et la partie réelle des signaux de sortie complexes de la transformation de Fourier rapide FFT sont appliquées chaque fois à une chaîne séparée d'éléments de temporisation, et
- chaque fois les valeurs de signal temporisées différemment de la chaîne, pour la partie imaginaire ou la partie réelle, qui doivent recevoir la même pondération, sont réunies par un additionneur puis pondérées à l'aide d'un unique multiplicateur et,
- chaque fois les signaux de sortie du multiplicateur sont réunis par d'autres additionneurs puis sont appliqués pour le multiplexage (figure 7).

2. Multiplexeur de fréquences pour réunir en fréquence (n) signaux d'entrée séparés de la largeur de bande B et détectés à la fréquence d'échantillonnage fa/n, ces signaux étant soumis à une transformation de Fourier rapide FFT, et leurs signaux complexes étant pondérés chaque fois par des coefficients par paires et injectés dans une chaîne d'éléments de temporisation et d'addition,
les signaux de sortie de cette chaîne étant multiplexés dans le temps avec la fréquence de détection fa pour former un signal de sortie multiplexé en fréquence, complexe,
caractérisé en ce que
- partant des chaînes, on extrait chaque fois un élément de temporisation parmi les éléments de temporisation et d'addition, et
- avec cet élément de temporisation, on retarde chaque fois la partie correspondante des signaux de sortie complexes donnés par la transformation de Fourier rapide FFT,
- puis, chaque partie retardée et chaque partie non retardée des signaux de sortie complexes de la transformation de Fourier rapide FFT sont pondérées avec des coefficients différents, sont réunies de façon correspondante par paires, et sont injectées chaque fois dans la chaîne résiduelle d'éléments de temporisation et d'éléments d'addition (figure 8).

3. Multiplexeur de fréquences selon la revendication 2,
caractérisé en ce que
les parties retardées et non retardées, correspondantes, des signaux de sortie complexes de la transformation de Fourier rapide FFT, parties qui doivent recevoir la même pondération, sont réunies par un additionneur puis sont pondérées dans un même multiplicateur.

4. Multiplexeur de fréquences selon l'une quelconque des revendications précédentes,
caractérisé en ce que
- dans les différentes branches, avant le multiplexage dans le temps, on effectue une quantification,
- pour compenser l'erreur de quantification moyenne dégagée par cette quantification, on injecte dans un additionneur un signal de correction entre l'un des multiplicateurs et le moyen de quantification.

5. Multiplexeur de fréquences selon l'une quelconque des revendications précédentes,
caractérisé en ce que
- chaque fois des ensembles égaux dans lesquels les différents signaux de sortie complexes sont soumis à une transformation de Fourier rapide FFT par le même traitement, sont remplacés par un seul de ces ensembles,
- les signaux de sortie complexes de la transformation de Fourier rapide FFT sont injectés en alternance, en multiplexage dans le temps, dans cet ensemble,
- le nombre d'éléments de temporisation est multiplié par le nombre de paires de signaux à injecter pour recevoir séquentiellement et stocker de façon intermédiaire les valeurs de signal injectées en alternance et,
- les valeurs complexes des différents signaux sont lues en alternance.

6. Multiplexeur de fréquences selon l'une des revendications précédentes,
caractérisé par
l'utilisation du procédé à étages multiples hiérarchisé dans une arborescence de filtre à étages multiples.

7. Multiplexeur de fréquences pour séparer en fréquence un signal multiplexé en fréquence composé de (n) signaux séparés de la largeur de bande B, obtenu par détection à la fréquence de détection fa,
caractérisé en ce qu'
on utilise un multiplexeur selon l'une quelconque des revendications précédentes, qui est soumis à une transposition, c'est-à-dire dont toutes les directions de passage des signaux sont inversées, en échangeant les entrées et les sorties, et, en remplaçant les additionneurs par des points de bifurcation et inversement, on remplace la transformation de Fourier rapide ou transformation de Fourier discrète par une transformation de Fourier inverse, discrète ou rapide, et l'augmentation de la fréquence de détection du coefficient (n) est remplacée par un abaissement de la fréquence de détection selon le coefficient (n), et toutes les fonctions de commutation pour le multiplexage sont remplacées par de telles fonctions pour le démultiplexage.

8. Démultiplexeur/multiplexeur de fréquences selon l'une des revendications précédentes,
caractérisé en ce que
les éléments de temporisation multipliés en nombre (n) ou les chaînes d'éléments de temporisation non interrompus par des éléments additionneurs ou des sorties intermédiaires, sont constitués par des structures de mémoire FIFO ou par une structure de mémoire morte (RAM).
